# EUROPEAN PATENT APPLICATION

(11) **EP 4 410 871 A1**
(43) Date of publication of application: **07.08.2024**
(21) Application number: 22875859.5
(22) Date of filing: 15.09.2022
(51) Int. Cl.: C08G 77/46, C08G 77/442, C08L 83/12, C09J 183/12

(54) **POLYMER AND CURABLE COMPOSITION**

(30) Priority: 28.09.2021 JP 2021157461
(71) Applicant: Kaneka Corporation, Osaka-shi, Osaka 530-8288 (JP)
(72) Inventor: SAITO, Takahiro, Takasago-shi, Hyogo 676-8688 (JP)
(74) Representative: Vossius & Partner Patentanwälte Rechtsanwälte mbB
(86) International application number: PCT/JP2022/034565
(87) International publication number: WO 2023/053988

(57) **Abstract**

A polysilsesquioxane polymer (A) includes: an alkoxysilyl group (a1) bonded to a polysilsesquioxane backbone and/or a silanol group (a2) bonded to the polysilsesquioxane backbone; an alkyl group (b1) having 1 to 10 carbon atoms and bonded directly to a silicon atom of the backbone and/or an aryl group (b2) having 6 to 10 carbon atoms and bonded directly to a silicon atom of the backbone; and a polyalkylene oxide polymer chain (c1) and/or a linear poly(meth)acrylic polymer chain (c2). One end of the polyalkylene oxide polymer chain (c1) and/or one end of the linear poly(meth)acrylic polymer chain (c2) is bonded to the polysilsesquioxane backbone.

## Description

### Technical Field

The present invention relates to a polysilsesquioxane polymer and a curable composition containing the polymer.

### Background Art

An organic polymer that has a silicon-containing group having a hydroxy or hydrolyzable group on a silicon atom and capable of forming a siloxane bond (this silicon-containing group will be hereinafter referred to as a "reactive silyl group") is known as a moisture-reactive polymer. This kind of organic polymers are contained in many industrial products such as adhesives, sealing materials, coating materials, paints, and pressure-sensitive adhesives and used in diverse fields. Among the reactive silyl group-containing organic polymers, those whose backbone is a polyalkylene oxide polymer or a (meth)acrylic polymer are in widespread use.

A known technique for improving the mechanical properties exhibited by such a reactive silyl group-containing organic polymer after curing is to blend the organic polymer with a polysilsesquioxane polymer. The polysilsesquioxane polymer is a siloxane polymer formed by a hydrolysis-dehydration condensation reaction of an organotrialkoxysilane and represented by the composition formula (RSiO_{1.5})ₙ. In this formula, R is a monovalent organic group such as a methyl group.

For example, Patent Literature 1 discloses a crosslinked composition containing: a polymer having a reactive silyl group; and a silicone resin containing a silsesquioxane unit. Patent Literature 2 discloses a composition containing: a silsesquioxane containing a phenyl group and an alkoxy group; a silylated polymer containing an alkoxysilane group; and a carbonate salt filler.

### Citation List

### Patent Literature

PTL 1: Japanese Laid-Open Patent Application Publication (Translation of PCT Application) No. 2014-521819
PTL 2: Japanese Laid-Open Patent Application Publication (Translation of PCT Application) No. 2020-521034

### Summary of Invention

### Technical Problem

Hitherto-known polysilsesquioxane polymers are poorly stable during storage and are prone to increase in viscosity. For this reason, they are difficult to handle in some cases.

In view of the above circumstances, the present invention aims to provide: a polysilsesquioxane polymer that exhibits high strength when cured together with a reactive silyl group-containing organic polymer and that has high storage stability; and a curable composition containing the polysilsesquioxane polymer.

### Solution to Problem

As a result of intensive studies with the goal of solving the above problem, the present inventors have found that a polysilsesquioxane polymer having a polysilsesquioxane backbone to which one end of a polyalkylene oxide polymer chain and/or one end of a linear poly(meth)acrylic polymer chain is bonded can be a solution to the above problem. Based on this finding, the inventors have arrived at the present invention.

Specifically, the present invention relates to a polysilsesquioxane polymer (A) including:
a polysilsesquioxane backbone;
an alkoxysilyl group (a1) bonded to the polysilsesquioxane backbone and/or a silanol group (a2) bonded to the polysilsesquioxane backbone;
an alkyl group (b1) having 1 to 10 carbon atoms and bonded directly to a silicon atom of the polysilsesquioxane backbone and/or an aryl group (b2) having 6 to 10 carbon atoms and bonded directly to a silicon atom of the polysilsesquioxane backbone; and
a polyalkylene oxide polymer chain (c1) and/or a linear poly(meth)acrylic polymer chain (c2), wherein
one end of the polyalkylene oxide polymer chain (c1) and/or one end of the linear poly(meth)acrylic polymer chain (c2) is bonded to the polysilsesquioxane backbone.

The present invention also relates to a method for producing the polysilsesquioxane polymer (A), the method including subjecting the following components to a hydrolysis and dehydration condensation reaction in the presence of water:
an alkoxysilane component containing a trialkoxysilane having a silicon atom bearing an alkyl group having 1 to 10 carbon atoms and/or an aryl group having 6 to 10 carbon atoms; and
a polyalkylene oxide polymer terminated at one end by a reactive silyl group and/or a linear poly(meth)acrylic polymer terminated at one end by a reactive silyl group.

The present invention further relates to a curable composition containing:
the polysilsesquioxane polymer (A);
a polyalkylene oxide polymer (B1) having a reactive silyl group and/or a poly(meth)acrylic polymer (B2) having a reactive silyl group; and
a curing catalyst (C).

### Advantageous Effects of Invention

The present invention can provide: a polysilsesquioxane polymer that exhibits high strength when cured together with a reactive silyl group-containing organic polymer and that has high storage stability; and a curable composition containing the polysilsesquioxane polymer.

### Description of Embodiments

Hereinafter, embodiments of the present invention will be described in detail.

### «Polysilsesquioxane Polymer (A)»

A polysilsesquioxane polymer (A) according to the present disclosure includes at least: a polysilsesquioxane backbone; an alkoxysilyl group (a1) and/or a silanol group (a2); an alkyl group (b1) having 1 to 10 carbon atoms and/or an aryl group (b2) having 6 to 10 carbon atoms; and a polyalkylene oxide polymer chain (c1) and/or a linear poly(meth)acrylic polymer chain (c2).

The polysilsesquioxane backbone refers to a siloxane polymer backbone represented by the composition formula (RSiO_{1.5})ₙ and is formed from a product of hydrolysis and condensation of an alkoxysilane component containing at least an organotrialkoxysilane.

The organotrialkoxysilane refers to a silane compound having one organic group bonded to a silicon atom and three alkoxy groups bonded to the silicon atom and is represented by the formula RSi(OR')₃. In this formula, R is the organic group and OR' is the alkoxy group. The organic group refers to an organic group other than alkoxy groups and contains at least an alkyl group having 1 to 10 carbon atoms and/or an aryl group having 6 to 10 carbon atoms.

The alkoxy group OR' bonded to the silicon atom is the same as the alkoxy group in the alkoxysilyl group (a1) optionally included in the polysilsesquioxane polymer (A). Specifically, the alkoxy group OR' may be an alkoxy group having 1 to 3 carbon atoms. More specific examples include methoxy, ethoxy, and propoxy groups. Methoxy and ethoxy groups are preferred, and a methoxy group is more preferred. There may be only one type, or two or more types, of such alkoxy groups.

The organotrialkoxysilane includes at least an organotrialkoxysilane whose organic group is an alkyl group and/or an organotrialkoxysilane whose organic group is an aryl group.

Specific examples of the organotrialkoxysilane whose organic group is an alkyl group include, but are not limited to, methyltrimethoxysilane, methyltriethoxysilane, methyltriisopropoxysilane, ethyltrimethoxysilane, ethyltriethoxysilane, ethyltriisopropoxysilane, propyltrimethoxysilane, propyltriethoxysilane, propyltriisopropoxysilane, butyltrimethoxysilane, butyltriethoxysilane, butyltriisopropoxysilane, pentyltrimethoxysilane, pentyltriethoxysilane, pentyltriisopropoxysilane, hexyltrimethoxysilane, octyltrimethoxysilane, and decyltrimethoxysilane. Among these, methyltrialkoxysilanes are preferred, and methyltrimethoxysilane is particularly preferred.

Specific examples of the organotrialkoxysilane whose organic group is an aryl group include, but are not limited to, phenyltrimethoxysilane, phenyltriethoxysilane, phenyltripropoxysilane, tolyltrimethoxysilane, tolyltriethoxysilane, tolyltripropoxysilane, xylyltrimethoxysilane, xylyltriethoxysilane, xylyltripropoxysilane, naphthyltrimethoxysilane, naphthyltriethoxysilane, and naphthyltripropoxysilane. Among these, phenyltrialkoxysilanes are preferred, and phenyltrimethoxysilane is particularly preferred.

The alkoxysilane component may be one that contains the organotrialkoxysilane whose organic group is an alkyl group but does not contain the organotrialkoxysilane whose organic group is an aryl group. The alkoxysilane component may be one that contains the organotrialkoxysilane whose organic group is an aryl group but does not contain the organotrialkoxysilane whose organic group is an alkyl group. The alkoxysilane component may contain both the organotrialkoxysilane whose organic group is an alkyl group and the organotrialkoxysilane whose organic group is an aryl group.

When the alkoxysilane component contains both the organotrialkoxysilane whose organic group is an alkyl group and the organotrialkoxysilane whose organic group is an aryl group, the molar ratio between the organotrialkoxysilanes (alkyl group:aryl group) is preferably from 1:99 to 99:1 in terms of the strength of a cured product obtained by curing the curable composition. In particular, in terms of the visual appearance of the cured product, the molar ratio is preferably from 45:55 to 99:1.

In the alkoxysilane component, the total proportion of the organotrialkoxysilane whose organic group is an alkyl group and the organotrialkoxysilane whose organic group is an aryl group is preferably from 80 to 100 mol%, more preferably from 90 to 100 mol%, even more preferably from 95 to 100 mol%, and particularly preferably from 99 to 100 mol% in terms of the physical properties of the polysilsesquioxane polymer (A). Examples of alkoxysilanes other than the organotrialkoxysilane whose organic group is an alkyl group and the organotrialkoxysilane whose organic group is an aryl group include organotrialkoxysilanes whose organic group is neither the alkyl group nor the aryl group, diorganodialkoxysilanes, triorganomonoalkoxysilanes, and tetraalkoxysilanes.

### <Alkoxysilyl Group (a1) and/or Silanol Group (a2)>

The polysilsesquioxane polymer (A) includes an alkoxysilyl group (a1) and/or a silanol group (a2), and these groups are bonded to the polysilsesquioxane backbone. Thanks to the presence of the alkoxysilyl group (a1) and/or silanol group (a2), the polysilsesquioxane polymer (A) is curable by a hydrolysis and dehydration condensation reaction.

The alkoxysilyl group (a1) is a group represented by -SiOR'. In production of the polysilsesquioxane polymer (A), some of alkoxy groups contained in an alkoxysilane used as a raw material remain unreacted. The alkoxysilyl group (a1) corresponds to such an alkoxy group remaining unreacted. The alkoxysilyl group may be, for example, an alkoxysilyl group having 1 to 3 carbon atoms. Specific examples of the alkoxysilyl group include methoxysilyl, ethoxysilyl, and propoxysilyl groups. Methoxysilyl and ethoxysilyl groups are preferred, and a methoxysilyl group is more preferred. There may be only one type, or two or more types, of such alkoxysilyl groups.

The silanol group (a2) is a group represented by -SiOH. In production of the polysilsesquioxane polymer (A), hydrolysis of alkoxy groups contained in an alkoxysilane used as a raw material is followed by dehydration condensation of the hydrolyzed groups; however, some of the hydrolyzed groups do not undergo dehydration condensation but remain without forming a siloxane bond. The silanol group (a2) corresponds to such a hydrolyzed group remaining without forming a siloxane bond.

### <Alkyl Group (b1) and/or Aryl Group (b2)>

The polysilsesquioxane polymer (A) further includes an alkyl group (b1) having 1 to 10 carbon atoms and/or an aryl group (b2) having 6 to 10 carbon atoms. The alkyl group (b1) and/or aryl group (b2) is bonded directly to a silicon atom of the polysilsesquioxane backbone and is a substituent on the silicon atom.

Examples of the alkyl group (b1) having 1 to 10 carbon atoms include methyl, ethyl, propyl, butyl, pentyl, hexyl, octyl, and decyl groups. The number of carbon atoms in the alkyl group is preferably from 1 to 4, more preferably from 1 to 3, even more preferably 1 or 2, and particularly preferably 1. The alkyl group may be unsubstituted or may be substituted with a halogen atom or a heteroatom-containing group such as an alkoxy or acyl group. There may be only one type, or two or more types, of such alkyl groups.

Examples of the aryl group (b2) having 6 to 10 carbon atoms include phenyl, tolyl, xylyl, and naphthyl groups. The number of carbon atoms in the aryl group is preferably from 6 to 10, more preferably from 6 to 8, even more preferably from 6 or 7, and particularly preferably 6. The aryl group may be unsubstituted or may be substituted with a halogen atom or a heteroatom-containing group such as an alkoxy or acyl group. There may be only one type, or two or more types, of such aryl groups.

The molar ratio between the alkyl group (b1) and the aryl group (b2) (alkyl group:aryl group) may be from 0:100 to 100:0 or may be from 1:99 to 99:1. In particular, in terms of the visual appearance of the cured product, the molar ratio is preferably from 45:55 to 99:1.

### <Polyalkylene Oxide Polymer Chain (c1) and/or Linear Poly(meth)acrylic Polymer Chain (c2)>

The polysilsesquioxane polymer (A) further includes a polyalkylene oxide polymer chain (c1) and/or a linear poly(meth)acrylic polymer chain (c2). The presence of these polymer chains can improve the storage stability of the polysilsesquioxane polymer. The polysilsesquioxane polymer (A) may be one that includes the polyalkylene oxide polymer chain (c1) but dose not include the poly(meth)acrylic polymer chain (c2) or may be one that includes the poly(meth)acrylic polymer chain (c2) but does not include the polyalkylene oxide polymer chain (c1). The polysilsesquioxane polymer (A) may include both the polyalkylene oxide polymer chain (c1) and the poly(meth)acrylic polymer chain (c2).

In the polysilsesquioxane polymer (A), one end of the polyalkylene oxide polymer chain (c1) and/or one end of the linear poly(meth)acrylic polymer chain (c2) is bonded to the polysilsesquioxane backbone. Only a particular one of the polymer chain ends is bonded to the polysilsesquioxane backbone, and the end other than the particular end is free without being bonded to the polysilsesquioxane backbone. Thus, the polyalkylene oxide polymer chain (c1) and/or the linear poly(meth)acrylic polymer chain (c2) can be considered a monovalent substituent.

A structure including two polysilsesquioxane backbones crosslinked by a polyalkylene oxide polymer chain or a linear poly(meth)acrylic polymer chain both ends of which are bonded to the polysilsesquioxane backbones (e.g., a structure shown in paragraph 0021 of Japanese Laid-Open Patent Application Publication No. 2013-49928) is excluded from the scope of the present disclosure.

The free end as mentioned above does not have any reactive silyl groups. Thus, a polymer chain terminated by a reactive silyl group, such as that described in paragraph 0131 of Japanese Laid-Open Patent Application Publication No. 2009-185169, is excluded from the scope of the present disclosure.

In the polysilsesquioxane polymer (A), it is preferable for the polyalkylene oxide polymer chain (c1) and the linear poly(meth)acrylic polymer chain (c2) to have no reactive silyl groups.

The bond between the polysilsesquioxane backbone and the polyalkylene oxide polymer chain (c1) and/or linear poly(meth)acrylic polymer chain (c2) is not limited to a particular type. In terms of stability, the polysilsesquioxane backbone and the polyalkylene oxide polymer chain (c1) and/or linear poly(meth)acrylic polymer chain (c2) are preferably bonded via a siloxane bond (-Si-O-). Such a siloxane bond can be formed by a later-described reaction of an alkoxysilane component and a polyalkylene oxide polymer terminated at one end by a reactive silyl group and/or a linear poly(meth)acrylic polymer terminated at one end by a reactive silyl group.

Examples of the polymer backbone of the polyalkylene oxide polymer chain (c1) include, but are not limited to, polyoxyethylene, polyoxypropylene, polyoxybutylene, polyoxytetramethylene, polyoxyethylene-polyoxypropylene copolymer, and polyoxypropylene-polyoxybutylene copolymer. Among these, polyoxypropylene is preferred.

The polyalkylene oxide polymer chain (c1) preferably has a linear polymer backbone. Preferably, only one of the two ends of the linear polymer backbone is bonded to the polysilsesquioxane backbone.

The polymer backbone of the poly(meth)acrylic polymer chain (c2) is preferably formed from a (meth)acrylic ester monomer. Examples of the (meth)acrylic ester monomer include, but are not limited to, methyl (meth)acrylate, ethyl (meth)acrylate, n-propyl (meth)acrylate, isopropyl (meth)acrylate, n-butyl (meth)acrylate, isobutyl (meth)acrylate, *tert-*butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, perfluoroethyl (meth)acrylate, trifluoromethyl (meth)acrylate, bis(trifluoromethyl)methyl (meth)acrylate, 2-trifluoromethyl-2-perfluoroethylethyl (meth)acrylate, 2-perfluorohexylethyl (meth)acrylate, 2-perfluorodecylethyl (meth)acrylate, and 2-perfluorohexadecylethyl (meth)acrylate. Among these, (meth)acrylic alkyl esters are preferred, acrylic alkyl esters are more preferred, and butyl acrylate is particularly preferred.

The (meth)acrylic ester monomer may be used in combination with another copolymerizable monomer. However, the proportion of the (meth)acrylic ester monomer in the total monomers forming the poly(meth)acrylic polymer chain (c2) is preferably from 60 to 100 wt%, more preferably 80 wt% or more, even more preferably 90 wt% or more, and particularly preferably 95 wt% or more.

The poly(meth)acrylic polymer chain (c2) has a linear polymer backbone, and only one of the two ends of the linear polymer backbone is bonded to the polysilsesquioxane backbone. For example, a poly(meth)acrylic polymer chain having a site that is other than the ends of a polymer backbone (e.g., a site within the polymer backbone) and that is bonded to the polysilsesquioxane backbone is excluded from the scope of the present disclosure.

The proportion of the polymer chain (c1) and/or (c2) in the polysilsesquioxane polymer (A) is not limited to a particular range. To benefit enough from the effect provided by the polymer chain (c1) and/or (c2), the weight ratio of the total amount of the alkyl group (b1) having 1 to 10 carbon atoms and the aryl group (b2) having 6 to 10 carbon atoms to the total amount of the polyalkylene oxide polymer chain (c1) and the linear poly(meth)acrylic polymer chain (c2) is preferably from 10:90 to 90:10. The weight ratio is more preferably from 15:85 to 85:15. The weight ratio may be from 20:80 to 80:20 or may be from 30:70 to 70:30.

The number-average molecular weight of the polysilsesquioxane polymer (A) is preferably from 400 to 10,000 and more preferably from 500 to 5,000. The number-average molecular weight of the polysilsesquioxane polymer (A) can be measured by GPC.

### <Production of Polysilsesquioxane Polymer (A)>

The polysilsesquioxane polymer (A) can be produced by subjecting the above-described alkoxysilane component containing an organotrialkoxysilane and a polyalkylene oxide polymer terminated at one end by a reactive silyl group and/or a linear poly(meth)acrylic polymer terminated at one end by a reactive silyl group to a hydrolysis and dehydration condensation reaction in the presence of water and optionally a condensation catalyst which is used as necessary.

The reaction takes place between alkoxy groups of the alkoxysilane component itself, resulting in formation of the polysilsesquioxane backbone. At the same time, the reaction takes place between alkoxy groups of the alkoxysilane component and reactive silyl groups of the polyalkylene oxide polymer or poly(meth)acrylic polymer, leading to the polyalkylene oxide polymer chain (c1) and/or linear poly(meth)acrylic polymer chain (c2) being bonded to the polysilsesquioxane backbone.

In the reaction process, some of the alkoxy groups contained in the alkoxysilane component remain unreacted, and/or after the alkoxy groups undergo hydrolysis, the hydrolyzed groups remain without undergoing dehydration condensation. This is why the polysilsesquioxane polymer (A) produced includes the alkoxysilyl group (a1) and/or the silanol group (a2).

The hydrolysis and dehydration condensation reaction is preferably carried out in the presence of added water. By adjusting the amount of water used, the amount of the alkoxysilyl groups and/or silanol groups in the resulting polysilsesquioxane polymer or the molecular weight of the polysilsesquioxane polymer can be controlled. From this viewpoint, the amount of water used is preferably from 20 to 80 mol%, more preferably from 25 to 70 mol%, even more preferably from 30 to 60 mol%, and particularly preferably from 35 to 50 mol% based on 100% of the total number of moles of the alkoxy groups on the silicon atoms in the alkoxysilane component.

The hydrolysis and dehydration condensation reaction is preferably carried out in the presence of a condensation catalyst to accelerate the reaction. A known condensation catalyst can be used. Specific examples of the condensation catalyst include a basic catalyst, an acidic catalyst, and a neutral salt. To improve the storage stability of the resulting polysilsesquioxane polymer, the condensation catalyst is preferably an acidic catalyst or a neutral salt and more preferably a neutral salt.

The acidic catalyst is preferably an organic acid and more preferably a phosphoric ester or a carboxylic acid in terms of compatibility with the alkoxysilane component. Specific examples of the organic acid include ethyl acid phosphate, butyl acid phosphate, dibutyl pyrophosphate, butoxyethyl acid phosphate, 2-ethylhexyl acid phosphate, isotridecyl acid phosphate, dibutyl phosphate, bis(2-ethylhexyl) phosphate, formic acid, acetic acid, butyric acid, and isobutyric acid.

Examples of the basic catalyst include: amine compounds such as *N-*ethylmorpholine, N-methyldiethanolamine, N-ethyldiethanolamine, N-n-butyldiethanolamine, *N-*t-butyldiethanolamine, triethylamine, n-butylamine, hexylamine, triethanolamine, diazabicycloundecene, and ammonia; and metal hydroxides such as sodium hydroxide and potassium hydroxide.

The neutral salt is a normal salt composed of a strong acid and a strong base. For example, the neutral salt is composed of a combination of a cation selected from ions of Group 1 elements, ions of Group 2 elements, tetraalkylammonium ions, and a guanidinium ion and an anion selected from ions of Group 17 elements other than a fluoride ion, a sulfate ion, a nitrate ion, and a perchlorate ion. In particular, the anion is preferably an ion of a Group 17 element since such an ion has high nucleophilicity, and the cation is preferably an ion which is not bulky, notably an ion of a Group 1 or 2 element, in order not to inhibit the nucleophilic action.

The neutral salt is not limited to particular compounds, and specific examples of preferred compounds include lithium chloride, sodium chloride, potassium chloride, rubidium chloride, cesium chloride, magnesium chloride, calcium chloride, strontium chloride, lithium bromide, sodium bromide, potassium bromide, rubidium bromide, cesium bromide, magnesium bromide, calcium bromide, strontium bromide, lithium iodide, sodium iodide, potassium iodide, rubidium iodide, cesium iodide, magnesium iodide, calcium iodide, and strontium iodide.

The amount of the condensation catalyst added may be adjusted as appropriate and may be, for example, from about 50 ppm to about 3 wt% based on the amount of the alkoxysilane component. To improve the stability of the polysilsesquioxane polymer (A), the amount of the condensation catalyst is preferably minimized to the extent that the condensation catalyst provides a reducing effect on the reaction time.

The reaction temperature in the hydrolysis and dehydration condensation step can be set as appropriate by those skilled in the art. For example, the reaction liquid is preferably heated to a temperature in the range of 50 to 110°C. The reaction time in the hydrolysis and dehydration condensation step can also be set as appropriate by those skilled in the art and may be, for example, from about 10 minutes to about 12 hours.

The step of removing an alcohol resulting from hydrolysis of the alkoxysilane component during production of the polysilsesquioxane polymer (A) may be performed after the hydrolysis and dehydration condensation step. In this case, the content of volatiles such as the alcohol in the polysilsesquioxane polymer (A) can be reduced. The alcohol removing step can be accomplished by subjecting the liquid mixture to distillation under reduced pressure and thus distilling off the alcohol. The conditions of the distillation under reduced pressure can be set as appropriate by those skilled in the art. For example, the temperature for the distillation under reduced pressure may be from about 60 to about 160°C.

### <Polyalkylene Oxide Polymer Terminated at One End by Reactive Silyl Group>

The polyalkylene oxide polymer that can be used to produce the polysilsesquioxane polymer (A) according to the present disclosure has a reactive silyl group at only one end of the polymer backbone.

The reactive silyl group is a silyl group having a hydroxy or hydrolyzable group on a silicon atom and able to undergo a hydrolysis and dehydration condensation reaction in the presence of water and optionally a condensation catalyst which is used as necessary.

Examples of the hydrolyzable group include hydrogen, halogens, and alkoxy, acyloxy, ketoximate, amino, amide, acid amide, aminooxy, mercapto, and alkenyloxy groups. Among these, alkoxy groups such as methoxy and ethoxy groups are more preferred in terms of moderate hydrolyzability and ease of handling. Methoxy and ethoxy groups are particularly preferred.

Examples of the reactive silyl group of the polyalkylene oxide polymer include, but are not limited to, trimethoxysilyl, triethoxysilyl, tris(2-propenyloxy)silyl, triacetoxysilyl, dimethoxymethylsilyl, diethoxymethylsilyl, dimethoxyethylsilyl, (chloromethyl)dimethoxysilyl, (chloromethyl)diethoxysilyl, (methoxymethyl)dimethoxysilyl, (methoxymethyl)diethoxysilyl, (N,N-diethylaminomethyl)dimethoxysilyl, and (*N,N*-diethylaminomethyl)diethoxysilyl groups.

The polymer backbone of the polyalkylene oxide polymer is the same as the polymer backbone of the above-described polyalkylene oxide polymer chain (c1) and will therefore not be described below.

One method for producing the polyalkylene oxide polymer terminated at only one end by the reactive silyl group is to produce a polyalkylene oxide polymer terminated at only one end by a hydroxy group by polymerizing an epoxy compound with an initiator having one hydroxy group and then convert the hydroxy group to a reactive silyl group-containing group by using a known method.

The initiator having one hydroxy group may be a monohydric alcohol, examples of which include methanol, ethanol, 2-propanol, n-butanol, isobutanol, 2-butanol, t-butanol, 2-ethylhexanol, decyl alcohol,, lauryl alcohol, tridecanol, cetyl alcohol, stearyl alcohol, and oleyl alcohol. Other examples include low-molecular-weight polyoxypropylene monoalkyl ethers.

The number-average molecular weight of the polyalkylene oxide polymer terminated at one end by the reactive silyl group is not limited to a particular range. The number-average molecular weight, as measured by GPC analysis as a polystyrene-equivalent molecular weight, is preferably from 500 to 50,000, more preferably from 500 to 30,000, and particularly preferably from 1,000 to 10,000.

The weight-average molecular weight of the polyalkylene oxide polymer terminated at one end by the reactive silyl group is not limited to a particular range. The weight-average molecular weight, as measured by GPC analysis as a polystyrene-equivalent molecular weight, is preferably from 500 to 80,000, more preferably from 3,000 to 70,000, and particularly preferably from 5,000 to 65,000.

### <Linear Poly(meth)acrylic Polymer Terminated at One End by Reactive Silyl Group>

The poly(meth)acrylic polymer that can be used to produce the polysilsesquioxane polymer (A) according to the present disclosure is a polymer having a linear polymer backbone and has a reactive silyl group at only one end of the linear backbone. The details of the reactive silyl group are the same as those of the reactive silyl group described above as one which is contained in the polyalkylene oxide polymer and will therefore not be described below.

The monomer forming the poly(meth)acrylic polymer is the same as the (meth)acrylic ester monomer described above for the poly(meth)acrylic polymer chain (c2) and will therefore not be described below.

The method for introducing the reactive silyl group into only one end of the polymer backbone of the poly(meth)acrylic polymer is not limited to a particular technique, and the reactive silyl group introduction can be accomplished by using any known method. One exemplary method is to polymerize the monomer in the presence of a chain transfer agent having a mercapto group and the reactive silyl group. With the use of such a chain transfer agent, the reactive silyl group can be introduced into only one end of the polymer backbone of the linear poly(meth)acrylic polymer.

Examples of the chain transfer agent include, but are not limited to, γ-mercaptopropyldimethoxymethylsilane, γ-mercaptopropyltrimethoxysilane, (mercaptomethyl)dimethoxymethylsilane, and (mercaptomethyl)trimethoxysilane.

The amount of the chain transfer agent used is preferably from 0.1 to 20 wt%, more preferably from 0.3 to 15 wt%, and even more preferably from 0.5 to 7 wt%, of the total amount of the total monomers forming the poly(meth)acrylic polymer and the chain transfer agent.

The polymerization method for producing the linear poly(meth)acrylic polymer terminated at one end by the reactive silyl group is not limited to a particular technique and may be commonly-known free radical polymerization. In the free radical polymerization, it is preferable to use a polymerization initiator such as an azo compound or a peroxide.

The number-average molecular weight of the linear poly(meth)acrylic polymer terminated at one end by the reactive silyl group is not limited to a particular range. The number-average molecular weight, as measured by GPC analysis as a polystyrene-equivalent molecular weight, is preferably from 500 to 50,000, more preferably from 500 to 30,000, and particularly preferably from 1,000 to 10,000. In particular, the number-average molecular weight is preferably 7,000 or less so that the polymer may have a low viscosity.

The weight-average molecular weight of the linear poly(meth)acrylic polymer terminated at one end by the reactive silyl group is not limited to a particular range. The weight-average molecular weight, as measured by GPC analysis as a polystyrene-equivalent molecular weight, is preferably from 500 to 80,000, more preferably from 3,000 to 70,000, and particularly preferably from 5,000 to 65,000. In particular, the weight-average molecular weight is preferably 15,000 or less so that the polymer may have a low viscosity.

### «Curable Composition»

A curable composition according to the present disclosure contains at least: the polysilsesquioxane polymer (A) described above; a polyalkylene oxide polymer (B1) having a reactive silyl group and/or a poly(meth)acrylic polymer (B2) having a reactive silyl group; and a curing catalyst (C). The curable composition cures to form a cured product through hydrolysis and dehydration condensation of the alkoxysilyl group (a1) and/or silanol group (a2) of the polysilsesquioxane polymer (A) and the reactive silyl group of the polyalkylene oxide polymer (B1) and/or poly(meth)acrylic polymer (B2).

### <Polyalkylene Oxide Polymer (B1) Having Reactive Silyl Group>

The polyalkylene oxide polymer (B1) has a reactive silyl group. The reactive silyl group refers to a silicon-containing group having a hydroxy or hydrolyzable group on a silicon atom and capable of forming a siloxane bond through a hydrolysis and dehydration condensation reaction. Specifically, the reactive silyl group can be represented by the following formula (1).

-Si(R¹)₃₋ₐ(X)ₐ (1)

In the formula (1), R¹ groups are each independently a hydrocarbon group having 1 to 20 carbon atoms, and the hydrocarbon group may have a heteroatom-containing group. X groups are each independently a hydroxy group or a hydrolyzable group. The integer a is 1, 2, or 3.

R¹ is a hydrocarbon group having 1 to 20 carbon atoms. The number of carbon atoms is preferably from 1 to 12, more preferably from 1 to 6, and particularly preferably from 1 to 4. The hydrocarbon group may be an unsubstituted hydrocarbon group or may be a hydrocarbon group substituted with a substituent.

The heteroatom-containing group with which the hydrocarbon group represented by R¹ may be substituted is a group containing a heteroatom. The heteroatom is defined herein as any atom other than carbon and hydrogen atoms.

Suitable examples of the heteroatom include N, O, S, P, Si, and halogen atoms. In the heteroatom-containing group, the total number of carbon atoms and heteroatoms is preferably from 1 to 10, more preferably from 1 to 6, and even more preferably from 1 to 4.

Suitable examples of R¹ include: alkyl groups such as methyl and ethyl groups; alkyl groups having a heteroatom-containing group, such as chloromethyl and methoxymethyl groups; cycloalkyl groups such as a cyclohexyl group; aryl groups such as a phenyl group; and aralkyl groups such as a benzyl group. R¹ is preferably a methyl, methoxymethyl, or chloromethyl group, more preferably a methyl or methoxymethyl group, and even more preferably a methyl group.

Examples of X include a hydroxy group, hydrogen, halogens, and alkoxy, acyloxy, ketoximate, amino, amide, acid amide, aminooxy, mercapto, and alkenyloxy groups. Among these, alkoxy groups are preferred in terms of moderate hydrolyzability and ease of handling. Methoxy and ethoxy groups are more preferred.

The integer a is 1, 2 or 3. The integer a is preferably 2 or 3. In terms of curability and the strength of the cured product, a is particularly preferably 2.

Specific examples of the reactive silyl group include, but are not limited to, trimethoxysilyl, triethoxysilyl, tris(2-propenyloxy)silyl, triacetoxysilyl, dimethoxymethylsilyl, diethoxymethylsilyl, dimethoxyethylsilyl, (chloromethyl)dimethoxysilyl, (chloromethyl)diethoxysilyl, (methoxymethyl)dimethoxysilyl, (methoxymethyl)diethoxysilyl, (*N*,*N*-diethylaminomethyl)dimethoxysilyl, and (*N,N*-diethylaminomethyl)diethoxysilyl groups. Among these, dimethoxymethylsilyl, trimethoxysilyl, triethoxysilyl, and (methoxymethyl)dimethoxysilyl groups are preferred to allow the cured product to have good mechanical properties. In terms of activity, trimethoxysilyl, (chloromethyl)dimethoxysilyl, and (methoxymethyl)dimethoxysilyl groups are more preferred, and trimethoxysilyl and (methoxymethyl)dimethoxysilyl groups are particularly preferred. In terms of stability, dimethoxymethylsilyl and triethoxysilyl groups are more preferred, and a dimethoxymethylsilyl group is particularly preferred.

The average number of the reactive silyl groups per molecule of the polyalkylene oxide polymer (B1) is preferably more than 1.0, more preferably 1.3 or more, and even more preferably 1.6 or more. The upper limit of the average number is not limited to a particular value, and the average number is preferably 6 or less and more preferably 5 or less. The average number of the reactive silyl groups per molecule of the polymer (B1) can be calculated from a result of NMR analysis.

Examples of the polymer backbone of the polyalkylene oxide polymer (B1) include polyoxyethylene, polyoxypropylene, polyoxybutylene, polyoxytetramethylene, polyoxyethylene-polyoxypropylene copolymer, and polyoxypropylene-polyoxybutylene copolymer. Each of these polymers may be present as a mixture of a block polymer and a graft polymer. Among these polymers, polyoxypropylene is particularly preferred. The polyalkylene oxide polymer (B1) preferably contains 50 wt% or more, more preferably 70 wt% or more, of repeating units of the alkylene oxide in the polymer backbone.

The polyalkylene oxide polymer (B1) may be a polymer having one type of polymer backbone or may be a mixture of two or more polymers having different polymer backbones. The mixture may be a mixture of polymers produced separately from each other or a mixture of polymers produced together in such a way as to achieve a given mix ratio between the polymers.

The number-average molecular weight of the polyalkylene oxide polymer (B1) is not limited to a particular range. The number-average molecular weight, as measured by GPC analysis as a polystyrene-equivalent molecular weight, is preferably from 3,000 to 100,000, more preferably from 3,000 to 50,000, and particularly preferably from 3,000 to 30,000. When the number-average molecular weight is in the above range, the amount of introduced reactive silyl groups is moderate. This makes it relatively easy to produce the polyalkylene oxide polymer (B1) having a viscosity suitable for handling and high workability while controlling the production cost within a desired range.

The molecular weight of the polyalkylene oxide polymer (B1) can be expressed also as an end group-equivalent molecular weight, which is determined as follows: before reactive silyl group introduction, a polymer precursor is subjected to titration analysis based on the principles of the hydroxy value measurement method as specified in JIS K 1557 and the iodine value measurement method as specified in JIS K 0070 to directly measure the end group concentration, from which the end group-equivalent molecular weight is calculated taking into account the architecture of the polymer (the degree of branching which depends on the polymerization initiator used). The end group-equivalent molecular weight of the polyalkylene oxide polymer (B1) can be determined also by creating a calibration curve representing the relationship between the number-average molecular weight of the polymer precursor as determined by common GPC analysis and the end group-equivalent molecular weight, determining the number-average molecular weight of the polyalkylene oxide polymer (B1) by GPC analysis, and converting the determined number-average molecular weight to the end group-equivalent molecular weight based on the calibration curve.

The polyalkylene oxide polymer (B1) is not limited to having a particular molecular weight distribution (Mw/Mn), but preferably has a narrow molecular weight distribution. Specifically, the dispersity Mw/Mn is preferably less than 2.0, more preferably 1.6 or less, even more preferably 1.5 or less, particularly preferably 1.4 or less, more particularly preferably 1.3 or less, and most preferably 1.2 or less. The molecular weight distribution of the polyalkylene oxide polymer (B1) can be determined from the number-average molecular weight and weight-average molecular weight obtained by GPC analysis.

The method for producing the polyalkylene oxide polymer (B1) is not limited to a particular technique, and the polyalkylene oxide polymer (B1) can be produced by a known method as disclosed, for example, in WO 2016/03571.

### <Poly(meth)acrylic Polymer (B2) Having Reactive Silyl Group>

The (meth)acrylic ester monomer used to form the main chain of the poly(meth)acrylic polymer (B2) having a reactive silyl group is not limited to particular compounds and may be any kind of (meth)acrylic ester monomer. Examples include (meth)acrylic monomers such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, (3-trimethoxysilyl)propyl (meth)acrylate, (3-dimethoxymethylsilyl)propyl (meth)acrylate, (2-trimethoxysilyl)ethyl (meth)acrylate, (2-dimethoxymethylsilyl)ethyl (meth)acrylate, trimethoxysilylmethyl (meth)acrylate, (dimethoxymethylsilyl)methyl (meth)acrylate, an ethylene oxide adduct of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, perfluoroethyl (meth)acrylate, trifluoromethyl (meth)acrylate, bis(trifluoromethyl)methyl (meth)acrylate, 2-trifluoromethyl-2-perfluoroethylethyl (meth)acrylate, 2-perfluorohexylethyl (meth)acrylate, 2-perfluorodecylethyl (meth)acrylate, and 2-perfluorohexadecylethyl (meth)acrylate.

Examples of monomers other than those mentioned above include: acrylic acids such as acrylic acid and methacrylic acid; monomers containing an amide group such as *N-*methylolacrylamide and N-methylolmethacrylamide; monomers containing an epoxy group such as glycidyl acrylate and glycidyl methacrylate; and monomers containing a nitrogen-containing group such as diethylaminoethyl acrylate and diethylaminoethyl methacrylate.

The poly(meth)acrylic polymer (B2) may be a polymer obtained by copolymerization of a (meth)acrylic ester monomer and a vinyl monomer copolymerizable with the (meth)acrylic ester monomer. Examples of the vinyl monomer include, but are not limited to: styrenic monomers such as styrene, vinyltoluene, α-methylstyrene, chlorostyrene, styrenesulfonic acid, and salts of styrenesulfonic acid; fluorine-containing vinyl monomers such as perfluoroethylene, perfluoropropylene, and vinylidene fluoride; silicon-containing vinyl monomers such as vinyltrimethoxysilane and vinyltriethoxysilane; maleic anhydride; maleic acid; monoalkyl and dialkyl esters of maleic acid; fumaric acid; monoalkyl and dialkyl esters of fumaric acid; maleimide monomers such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; nitrile group-containing vinyl monomers such as acrylonitrile and methacrylonitrile; amide group-containing vinyl monomers such as acrylamide and methacrylamide; vinyl ester monomers such as vinyl acetate, vinyl propionate, vinyl pivalate, vinyl benzoate, and vinyl cinnamate; alkenyl monomers such as ethylene and propylene; conjugated diene monomers such as butadiene and isoprene; vinyl chloride; vinylidene chloride; allyl chloride; and allyl alcohol. Two or more of the above monomers may be used as copolymerization components.

The poly(meth)acrylic polymer (B2) is preferably a (co)polymer formed from a (meth)acrylic ester monomer or a copolymer formed from a (meth)acrylic ester monomer and a styrenic monomer since such polymers have good physical properties. The poly(meth)acrylic polymer (B2) is more preferably a (co)polymer formed from a (meth)acrylic ester monomer and particularly preferably a (co)polymer formed from an acrylic ester monomer.

The poly(meth)acrylic polymer (B2) has a reactive silyl group. The details of the reactive silyl group are the same as those of the reactive silyl group of the polyalkylene oxide polymer (B1) and will therefore not be described below.

The method for producing the poly(meth)acrylic polymer (B2) is not limited to a particular technique, and the poly(meth)acrylic polymer (B2) can be produced by a known method as disclosed, for example, in WO 2016/03571.

The monomer composition of the poly(meth)acrylic polymer (B2) can be chosen depending on the intended application or purpose. In an application requiring high strength, the poly(meth)acrylic polymer (B2) preferably has a relatively high glass transition temperature (Tg). The glass transition temperature Tg is preferably from 0 to 200°C and more preferably from 20 to 100°C. The glass transition temperature Tg is determined by the Fox equation mentioned above.

The number-average molecular weight of the poly(meth)acrylic polymer (B2) is not limited to a particular range. The number-average molecular weight, as measured by GPC analysis as a polystyrene-equivalent molecular weight, is preferably from 500 to 50,000 and more preferably from 500 to 30,000.

In the curable composition according to the present disclosure, the content of the polysilsesquioxane polymer (A) can be chosen as appropriate in view of factors such as the curability of the composition and the strength of the cured product of the composition. The proportion of the polysilsesquioxane polymer (A) in the total amount of the polysilsesquioxane polymer (A) and the polyalkylene oxide polymer (B 1) having a reactive silyl group and/or the poly(meth)acrylic polymer (B2) having a reactive silyl group is preferably from 1 to 90 wt%, more preferably from 2 to 70 wt%, even more preferably from 3 to 60 wt%, particularly preferably from 4 to 50 wt%, and most preferably from 5 to 40 wt%.

### <<Curing Catalyst (C)>>

The curable composition according to the present disclosure preferably contains a curing catalyst (C) for the purpose of accelerating a hydrolysis and dehydration condensation reaction of the alkoxysilyl group (a1) and/or silanol group (a2) of the polysilsesquioxane polymer (A) and the reactive silyl group of the polyalkylene oxide polymer (B1) and/or poly(meth)acrylic polymer (B2), i.e., a curing reaction.

The curing catalyst used may be a hitherto-known curing catalyst, specific examples of which include an organotin compound, a metal carboxylate, an amine compound, a carboxylic acid, an alkoxy metal, and an inorganic acid.

Specific examples of the organotin compound include dibutyltin dilaurate, dibutyltin dioctanoate, dibutyltin bis(butyl maleate), dibutyltin diacetate, dibutyltin oxide, dibutyltin bis(acetylacetonate), a reaction product of dibutyltin oxide and a silicate compound, a reaction product of dibutyltin oxide and a phthalic ester, dioctyltin diacetate, dioctyltin dilaurate, dioctyltin bis(ethyl maleate), dioctyltin bis(octyl maleate), dioctyltin bis(acetylacetonate), dioctyltin distearate, dioctyltin oxide, and a reaction product of dioctyltin oxide and a silicate compound. Dioctyltin compounds are preferred in view of the recent increased awareness of environmental issues.

Specific examples of the metal carboxylate include tin carboxylate, bismuth carboxylate, titanium carboxylate, zirconium carboxylate, iron carboxylate, potassium carboxylate, calcium carboxylate, and cesium carboxylate. The metal carboxylate may be a combination of any of the carboxylic acids mentioned below and any of various metals.

Specific examples of the amine compound include: amines such as octylamine, 2-ethylhexylamine, laurylamine, and stearylamine; nitrogen-containing heterocyclic compounds such as pyridine, 1,8-diazabicyclo[5,4,0]undec-7-ene (DBU), and 1,5-diazabicyclo[4,3,0]non-5-ene (DBN); guanidines such as guanidine, phenylguanidine, and diphenylguanidine; biguanides such as butylbiguanide, 1-*o*-tolylbiguanide, and 1-phenylbiguanide; amino group-containing silane coupling agents; and ketimine compounds.

Specific examples of the carboxylic acid include acetic acid, propionic acid, butyric acid, 2-ethylhexanoic acid, lauric acid, stearic acid, oleic acid, linoleic acid, neodecanoic acid, and versatic acid.

Specific examples of the alkoxy metal include: titanium compounds such as tetrabutyl titanate, titanium tetrakis(acetylacetonate), and diisopropoxytitanium bis(ethyl acetoacetate); aluminum compounds such as aluminum tris(acetylacetonate) and diisopropoxyaluminum ethyl acetoacetate; and zirconium compounds such as zirconium tetrakis(acetylacetonate).

Examples of other condensation catalysts that can be used include fluorine anion-containing compounds, photoacid generators, and photobase generators.

Two or more different curing catalysts may be used in combination. For example, the use of the above-mentioned amine compound in combination with the above-mentioned carboxylic acid or alkoxy metal can provide a reactivity-enhancing effect.

In terms of curing speed, the curing catalyst (C) used is preferably at least one selected from the group consisting of tetravalent tin compounds and amine compounds having a amidine skeleton.

In terms of ensuring both increased curing reaction speed and high workability in the curing process, the amount of the curing catalyst (C) is preferably from 0.01 to 20 parts by weight, more preferably from 0.05 to 15 parts by weight, even more preferably from 0.1 to 10 parts by weight, still even more preferably from 0.5 to 7 parts by weight, and particularly preferably from 1 to 5 parts by weight per 100 parts by weight of the total amount of the polysilsesquioxane polymer (A) and the polyalkylene oxide polymer (B1) and/or poly(meth)acrylic polymer (B2).

### «Curable Composition»

The curable composition according to the present disclosure may, if necessary, contain various additives in addition to the polysilsesquioxane polymer (A), the polyalkylene oxide polymer (B1) and/or poly(meth)acrylic polymer (B2), and the curing catalyst (C). Examples of the additives include a filler, an adhesion promoter, a plasticizer, an anti-sagging agent, an antioxidant, a light stabilizer, an ultraviolet absorber, a property modifier, an epoxy group-containing compound, a photocurable material, an oxygen-curable material, and an organic resin other than the polyalkylene oxide polymer (B1) and/or poly(meth)acrylic polymer (B2).

To adjust various physical properties of the curable composition or cured product, additives other than those mentioned above may be added to the curable composition if necessary. Examples of the other additives include a tackifying resin, a solvent, a diluent, an epoxy resin, a surface modifier, a blowing agent, a curability modifier, a flame retardant, a silicate, a radical inhibitor, a metal deactivator, an antiozonant, a phosphorus-based peroxide decomposer, a lubricant, a pigment, and a fungicide.

The curable composition can be prepared as a one-part composition all the components of which are blended together and hermetically stored and which, when applied to an object, cures under the action of moisture in the air. Preferably, the one-part curable composition is substantially free of water. The water content is preferably 5 wt% or less and more preferably 1 wt% or less.

The curable composition can be prepared also as a two-part composition consisting of: a base material which contains the polysilsesquioxane polymer (A) and the polyalkylene oxide polymer (B1) and/or poly(meth)acrylic polymer (B2); and a curing agent which is prepared separately from the base material by blending components such as a curing catalyst, a filler, a plasticizer, and water. In the case of this two-part composition, the base material and the curing agent are mixed before use. Preferably, the base material of the two-part composition is substantially free of water. The water content is preferably 5 wt% or less and more preferably 1 wt% or less.

In terms of workability, the curable composition is preferably prepared as a one-part composition.

Before curing, the curable composition is formed into a desired shape by a process such as coating, casting, or filling. The curable composition formed into a desired shape by coating, casting, or filling can be cured at room temperature or under heating. The curing under heating is not limited to particular conditions. Preferably, the curing temperature is from 60 to 220°C and the curing time is from 1 to 120 minutes. More preferably, the curing temperature is from 100 to 200°C and the curing time is from 5 to 60 minutes.

The curable composition according to the present disclosure can be used as an adhesive, a pressure-sensitive adhesive, a sealing material for sealing purposes in buildings, ships, automobiles, and roads, a mold making material, a paint, or a spray material. A cured product obtained by curing the curable composition is suitable for use as a waterproof material, a waterproof coating material, a vibration-isolating material, a vibration-damping material, a soundproof material, or a foam material.

In the following items, preferred aspects of the present disclosure are listed. The present invention is not limited to the following items.
[Item 1] A polysilsesquioxane polymer (A) including:
   a polysilsesquioxane backbone;
   an alkoxysilyl group (a1) bonded to the polysilsesquioxane backbone and/or a silanol group (a2) bonded to the polysilsesquioxane backbone;
   an alkyl group (b1) having 1 to 10 carbon atoms and bonded directly to a silicon atom of the polysilsesquioxane backbone and/or an aryl group (b2) having 6 to 10 carbon atoms and bonded directly to a silicon atom of the polysilsesquioxane backbone; and
   a polyalkylene oxide polymer chain (c1) and/or a linear poly(meth)acrylic polymer chain (c2), wherein
   one end of the polyalkylene oxide polymer chain (c1) and/or one end of the linear poly(meth)acrylic polymer chain (c2) is bonded to the polysilsesquioxane backbone.
[Item 2] The polysilsesquioxane polymer (A) according to item 1, including the polyalkylene oxide polymer chain (c1).
[Item 3] The polysilsesquioxane polymer (A) according to item 1, including the linear poly(meth)acrylic polymer chain (c2).
[Item 4] The polysilsesquioxane polymer (A) according to any one of items 1 to 3, wherein a weight ratio of a total amount of the alkyl group (b1) having 1 to 10 carbon atoms and the aryl group (b2) having 6 to 10 carbon atoms to a total amount of the polyalkylene oxide polymer chain (c1) and the linear poly(meth)acrylic polymer chain (c2) is from 10:90 to 90:10.
[Item 5] A method for producing the polysilsesquioxane polymer (A) according to any one of items 1 to 4, the method including subjecting the following components to a hydrolysis and dehydration condensation reaction in the presence of water:
   an alkoxysilane component containing a trialkoxysilane having a silicon atom bearing an alkyl group having 1 to 10 carbon atoms and/or an aryl group having 6 to 10 carbon atoms; and
   a polyalkylene oxide polymer terminated at one end by a reactive silyl group and/or a linear poly(meth)acrylic polymer terminated at one end by a reactive silyl group.
[Item 6] A curable composition containing:
   the polysilsesquioxane polymer (A) according to any one of items 1 to 4;
   a polyalkylene oxide polymer (B1) having a reactive silyl group and/or a poly(meth)acrylic polymer (B2) having a reactive silyl group; and
   a curing catalyst (C).
[Item 7] The curable composition according to item 6, wherein a proportion of the polysilsesquioxane polymer (A) in a total amount of the polysilsesquioxane polymer (A) and the polyalkylene oxide polymer (B1) having a reactive silyl group and/or the poly(meth)acrylic polymer (B2) having a reactive silyl group is from 1 to 90 wt%.
[Item 8] A sealing material containing the curable composition according to item 6 or 7.
[Item 9] An adhesive containing the curable composition according to item 6 or 7.
[Item 10] A cured product produced by curing the curable composition according to item 6 or 7.

### Examples

Hereinafter, the present invention will be described in more detail using examples. The present invention is not limited to the examples given below.

The number-average molecular weights and weight-average molecular weights in Synthesis Examples are GPC molecular weights measured under the following conditions.
Delivery system: HLC-8420 GPC manufactured by Tosoh Corporation
Column: TSKgel SuperH series manufactured by Tosoh Corporation
Solvent: THF
Molecular weight: Polystyrene equivalent
Measurement temperature: 40°C

The end group-equivalent molecular weights in Synthesis Examples are molecular weights each of which was measured as follows: hydroxy and iodine values were measured, respectively, by the measurement method as specified in JIS K 1557 and the measurement method as specified in JIS K 0070, and the molecular weight was calculated based on the hydroxy and iodine values taking into account the architecture of the organic polymer (the degree of branching which depends on the polymerization initiator used).

The average number of introduced silyl groups in each of the polymers of Synthesis Examples was determined by NMR analysis.

### (Synthesis Example 1)

Propylene oxide was polymerized using butanol as an initiator in the presence of a zinc hexacyanocobaltate-glyme complex catalyst to obtain polyoxypropylene terminated at one end by a hydroxy group and having a number-average molecular weight of 7800 (end group-equivalent molecular weight = 5000) and a dispersity Mw/Mn of 1.48.

Subsequently, sodium methoxide dissolved in methanol at a concentration of 28% was added in an amount of 1.2 molar equivalents per molar equivalent of the hydroxy groups of the hydroxy-terminated polyoxypropylene. Methanol was distilled off by evaporation under vacuum, and then 2.0 molar equivalents of allyl chloride was added per molar equivalent of the hydroxy groups of the polymer to convert the terminal hydroxy groups to allyl groups. Allyl chloride remaining unreacted was removed by evaporation under reduced pressure. To the resulting unpurified polyoxypropylene were added n-hexane and water, and the mixture was stirred and then centrifuged to remove water. Hexane was evaporated from the resulting hexane solution under reduced pressure, and thus the metal salt was removed from the polymer. In this manner, polyoxypropylene terminated at only one end by an allyl group was obtained.

To 500 g of the obtained polymer was added 50 µl of a platinum-divinyldisiloxane complex (2-propanol solution with a concentration of 3 wt% calculated as the platinum content), and 9.5 g of dimethoxymethylsilane was slowly added dropwise under stirring. The liquid mixture was reacted at 100°C for 2 hours, after which dimethoxymethylsilane remaining unreacted was distilled off under reduced pressure to obtain polyoxypropylene (c1'-1) terminated at only one end by a dimethoxymethylsilyl group. This polymer terminated at only one end by a dimethoxymethylsilyl group was found to have 0.8 dimethoxymethylsilyl groups on average per molecule.

### (Synthesis Example 2)

A four-necked flask equipped with a stirrer was charged with 22 parts by weight of isobutanol, which was heated to 105°C under nitrogen atmosphere. To the heated isobutanol were added dropwise over 5 hours a liquid mixture prepared by dissolving 96.3 parts by weight of butyl acrylate, 3.7 parts by weight of γ-mercaptopropyltrimethoxysilane, and 0.35 parts by weight of 2,2'-azobis(2-methylbutyronitrile) in 17.5 parts by weight of isobutanol, and the polymerization was allowed to proceed at 105°C for another 1.5 hours. Isobutanol was removed from the resulting isobutanol solution of a poly(meth)acrylic polymer by heating under reduced pressure to obtain a (meth)acrylic polymer (c2'-1) terminated at only one molecular chain end by a trimethoxysilyl group. This polymer was found to have 0.7 trimethoxysilyl groups on average per molecule and have a number-average molecular weight of 3,900 and a weight-average molecular weight of 8,000.

### (Synthesis Example 3)

A four-necked flask equipped with a stirrer was charged with 22 parts by weight of isobutanol, which was heated to 105°C under nitrogen atmosphere. To the heated isobutanol were added dropwise over 5 hours a liquid mixture prepared by dissolving 96.6 parts by weight of butyl acrylate, 3.4 parts by weight of γ-mercaptopropyldimethoxymethylsilane, and 0.35 parts by weight of 2,2'-azobis(2-methylbutyronitrile) in 17.5 parts by weight of isobutanol, and the polymerization was allowed to proceed at 105°C for another 1.5 hours. Isobutanol was removed from the resulting isobutanol solution of a poly(meth)acrylic polymer by heating under reduced pressure to obtain a (meth)acrylic polymer (c2'-2) terminated at only one molecular chain end by a dimethoxymethylsilyl group. This polymer was found to have 0.7 dimethoxymethylsilyl groups on average per molecule and have a number-average molecular weight of 3,900 and a weight-average molecular weight of 8,000.

### (Example 1)

At room temperature, a four-necked flask equipped with a stirrer was charged with 50.1 parts by weight of the polyoxypropylene (c1'-1) obtained in Synthesis Example 1 and terminated at only one end by a dimethoxymethylsilyl group, 98.1 parts by weight of methyltrimethoxysilane as a silane monomer, 27.3 parts by weight of water (70 mol% based on 100 mol% of the alkoxy groups of the alkoxysilane component), and 0.1 parts by weight of a 10% aqueous LiBr solution. The contents of the flask were then heated, and the reaction was allowed to proceed for 6 hours under reflux with methanol generated during the reaction. Methanol was removed from the resulting methanol solution by heating under reduced pressure to obtain a polysilsesquioxane polymer (A-1) having a polyalkylene oxide polymer chain (c1-1). Only one end of the polyalkylene oxide polymer chain (c1) is bonded to the polysilsesquioxane backbone.

### (Examples 2 to 8)

Polysilsesquioxane polymers (A-2) to (A-8) having a polyalkylene oxide polymer chain (c1) were obtained in the same manner as the polymer (A-1) of Example 1, except that the amounts of the components were changed as shown in Table 1. The abbreviations used in Table 1 refer to the following silane monomers.
MeTMS: Methyltrimethoxysilane
PhTMS: Phenyltrimethoxysilane

### (Examples 9 and 10)

Polysilsesquioxane polymers (A-9) and (A-10) having a linear poly(meth)acrylic polymer chain (c2-1) or (c2-2) were obtained in the same manner as the polymer (A-1) of Example 1, except that the (meth)acrylic polymer (c2'-1) obtained in Synthesis Example 2 and terminated at only one end by a trimethoxysilyl group or the (meth)acrylic polymer (c2'-2) obtained in Synthesis Example 3 and terminated at only one end by a dimethoxymethylsilyl group was used and that the amounts of the components were changed as shown in Table 1. Only one end of the linear poly(meth)acrylic polymer chain (c2-1) or (c2-2) is bonded to the polysilsesquioxane backbone.

### (Comparative Example 1)

A polysilsesquioxane polymer having neither the polymer chain (c1) nor the polymer chain (c2) was obtained in the same manner as the polymer (A-1) of Example 1, except that the amounts of the components were changed as shown in Table 1.

The viscosity of each of the polysilsesquioxane polymers obtained in Examples 1 to 10 and Comparative Example 1 was measured using a viscometer, model RE80 manufactured by Tokyo Keiki Inc. The measurement temperature was 23°C and the rotor used was a 3° × R14 rotor.

The viscosity as measured after 1-week storage at 50°C was divided by the viscosity as measured before the storage (early period) to calculate the percentage of viscosity change caused by the storage. The smaller the percentage is, the higher the storage stability is. The results are shown in Table 1.

**[Table 1]**

| | | Ex. 1 | Ex. 2 | Ex. 3 | Ex. 4 | Ex. 5 | Ex. 6 | Ex. 7 | Ex. 8 | Ex. 9 | Ex. 10 | Comp. 1 |
|---|---|---|---|---|---|---|---|---|---|---|---|---|
| | | A-1 | A-2 | A-3 | A-4 | A-5 | A-6 | A-7 | A-8 | A-9 | A-10 | |
| Component (c1) | c1'-1 | 50.1 | 50.1 | 50.1 | 25.1 | 25.1 | 25.1 | 10.0 | 10.0 | | | |
| Component (c2) | c2'-1 | | | | | | | | | 25.1 | | |
| | c2'-2 | | | | | | | | | | 25.1 | |
| Silane monomer | MeTMS | 98.1 | 98.1 | 98.1 | 147.1 | 147.1 | 147.1 | 176.6 | 88.3 | 147.1 | 147.1 | 49 |
| | PhTMS | | | | | | | | 66.9 | | | 111.6 |
| Water | | 27.3 | 19.5 | 15.6 | 29.2 | 26.2 | 23.3 | 27.9 | 21.2 | 23.4 | 23.3 | 22.3 |
| (mol%) | | 70% | 50% | 40% | 50% | 45% | 40% | 40% | 40% | 40% | 40% | 45% |
| 10% aqueous LiBr solution | | 0.1 | 0.1 | 0.1 | 0.1 | 0.1 | 0.1 | 0.1 | 0.1 | 0.1 | 0.1 | 0.1 |
| Proportion in total amount of (b1), (b2), (c1), and (c2) (wt%) | Polymer chain (c1-1) | 82% | 82% | 82% | 60% | 60% | 60% | 34% | 22% | 0% | 0% | 0% |
| | Polymer chain (c2-1) | 0% | 0% | 0% | 0% | 0% | 0% | 0% | 0% | 60% | 0% | 0% |
| | Polymer chain (c2-2) | 0% | 0% | 0% | 0% | 0% | 0% | 0% | 0% | 0% | 60% | 0% |
| | Methyl group (b1) | 18% | 18% | 18% | 40% | 40% | 40% | 66% | 21% | 40% | 40% | 11% |
| | Phenyl group (b2) | 0% | 0% | 0% | 0% | 0% | 0% | 0% | 57% | 0% | 0% | 89% |
| Early period | Viscosity (Pa•s) | 218 | 7 | 0.6 | 28 | 7 | 0.3 | 0.4 | 0.6 | 0.6 | 0.6 | 324 |
| After 1W at 50°C | Viscosity (Pa•s) | 278 | 8 | 0.7 | 39 | 11 | 0.3 | 0.4 | 0.7 | 0.8 | 0.7 | 1085 |
| Storage stability | Percentage of change | 128% | 111% | 110% | 138% | 154% | 108% | 101% | 118% | 127% | 122% | 335% |

The results shown in Table 1 reveal that the polysisequioxane polymers (A-1) to (A-10)of Examples 1 to 10, which had the polyalkylene oxide polymer chain (c1) and/or linear poly(meth)acrylic polymer chain (c2), exhibited a much smaller value of the percentage of storage-induced viscosity change and had higher storage stability than the polysilsesquioxane polymer of Comparative Example 1 which had neither the polymer chain (c1) nor the polymer chain (c2).

### (Synthesis Example 4)

Propylene oxide was polymerized using polyoxypropylene triol having a number-average molecular weight of about 4,500 as an initiator in the presence of a zinc hexacyanocobaltate-glyme complex catalyst. This polymerization yielded polyoxypropylene terminated by hydroxy groups and having a number-average molecular weight of 24,600 (end group-equivalent molecular weight = 17,400) and a dispersity Mw/Mn of 1.31.

Sodium methoxide dissolved in methanol at a concentration of 28% was added in an amount of 1.2 molar equivalents per molar equivalent of the hydroxy groups of the hydroxy-terminated polyoxypropylene. Methanol was distilled off by evaporation under vacuum, and then 1.5 molar equivalents of allyl chloride was added per molar equivalent of the hydroxy groups of the polymer to convert the terminal hydroxy groups to allyl groups. Allyl chloride remaining unreacted was removed by evaporation under reduced pressure. To the resulting unpurified polyoxypropylene were added n-hexane and water, and the mixture was stirred and then centrifuged to remove water. Hexane was evaporated from the resulting hexane solution under reduced pressure, and thus the metal salt was removed from the polymer. In this manner, polyoxypropylene terminated by allyl groups was obtained.

To 500 g of this polymer was added 50 µl of a platinum-divinyldisiloxane complex (isopropanol solution with a concentration of 3 wt% calculated as the platinum content), and 6.4 g of dimethoxymethylsilane was slowly added dropwise under stirring. The reaction was allowed to proceed at 100°C for 2 hours, after which dimethoxymethylsilane remaining unreacted was distilled off under reduced pressure to obtain polyoxypropylene (B1-1) terminated by dimethoxymethylsilyl groups and having a number-average molecular weight of 26,200. This polymer was found to have 0.7 dimethoxymethylsilyl group on average per molecular chain end and 2.2 dimethoxymethylsilyl groups on average per molecule.

### (Synthesis Example 5)

An amount of 0.84 g of cuprous bromide, 8.79 g of acetonitrile, 20.0 g of n-butyl acrylate, and 1.76 g of diethyl 2,5-dibromoadipate were added and stirred at 70 to 80°C for about 30 minutes. Pentamethyldiethylenetriamine was added to the mixture to initiate a reaction. Addition of n-butyl acrylate was started 30 minutes after the initiation of the reaction, and 80.0 g of *n*-butyl acrylate was continuously added over 2 hours. Pentamethyldiethylenetriamine was added at times during the reaction, and the internal temperature was controlled in the range of 70 to 90°C. The total amount of pentamethyldiethylenetriamine used for the polymerization was 0.15 g. At 4 hours after the initiation of the reaction, the reaction mixture was heated and stirred at 80°C under reduced pressure to remove volatiles. To the resulting mixture were added 35.0 g of acetonitrile, 21.0 g of 1,7-octadiene, and 0.34 g of pentamethyldiethylenetriamine, and the mixture was continued to be stirred for 8 hours. The mixture was heated and stirred at 80°C under reduced pressure to remove volatiles.

To the resulting concentrate was added butyl acetate, and the polymer was dissolved. After that, diatomite as a filtration aid, and aluminum silicate and hydrotalcite as adsorbents, were added and the mixture was heated and stirred at an internal temperature of 100°C under an atmosphere of an oxygen-nitrogen gas mixture (oxygen concentration = 6%). The liquid mixture was filtered to remove solids, and the filtrate was heated and stirred at an internal temperature of 100°C under reduced pressure to remove volatiles.

To the resulting concentrate were added aluminum silicate and hydrotalcite as adsorbents and a thermal degradation inhibitor. The mixture was heated and stirred under reduced pressure (average temperature = about 175°C, reduced pressure = 10 Torr or less).

Aluminum silicate and hydrotalcite as adsorbents were further added, and an antioxidant was added. The mixture was heated and stirred at an internal temperature of 150°C under an atmosphere of an oxygen-nitrogen gas mixture (oxygen concentration = 6%).

To the resulting concentrate was added butyl acetate, and the polymer was dissolved. The liquid mixture was filtered to remove solids, and the filtrate was heated and stirred under reduced pressure to remove volatiles. Thus, an alkenyl group-containing polymer was obtained.

The alkenyl group-containing polymer was mixed with dimethoxymethylsilane (2.0 molar equivalents per molar equivalent of alkenyl groups), methyl ortho formate (1.0 molar equivalents per molar equivalent of alkenyl groups), and a platinum catalyst (xylene solution of a bis(1,3-divinyl-1,1,3,3-tetramethyldisiloxane)-platinum complex catalyst, platinum amount = 10 mg per kg of polymer; this solution will be hereinafter referred to as "platinum catalyst"). The mixture was heated and stirred at 100°C under nitrogen atmosphere. After confirmation of loss of the alkenyl groups, the reaction mixture was concentrated to obtain an acrylic polymer (B2-1) terminated by dimethoxymethylsilyl groups. The acrylic polymer had a number-average molecular weight of 24,700, had a dispersity of 1.3, and had 1.9 terminal dimethoxymethylsilyl groups on average per molecule.

### (Example 11)

The following components were mixed: 30 parts by weight of the component (A), 70 parts by weight of the component (B), and 50 parts by weight of surface-treated colloidal calcium carbonate (manufactured by Shiraishi Kogyo Kaisha, Ltd., trade name: Hakuenka CCR). The component (A) was the polysilsesquioxane polymer (A-8) obtained in Example 8 and the component (B) was the polyoxypropylene (B1-1) obtained in Synthesis Example 4. The mixture was thoroughly kneaded and then passed through a small-sized three-roll paint mill three times. After that, the mixture was dehydrated under reduced pressure at 120°C for 2 hours and cooled to 50°C or lower. To the cooled mixture were added 3 parts by weight of vinyltrimethoxysilane as a dehydrating agent (manufactured by Momentive Performance Materials Inc., trade name: Silquest A-171), 2 parts by weight of γ-(2-aminoethyl)aminopropyltrimethoxysilane as an adhesion promoter (manufactured by Momentive Performance Materials Inc., trade name: Silquest A-1 120), 1.5 parts by weight of tin(II) octylate as the curing catalyst (C) (manufactured by Nitto Kasei Co., Ltd., trade name: Neostann U-28), and 0.25 parts by weight of laurylamine (manufactured by Wako Pure Chemical Industries, Ltd.). The mixture was kneaded to obtain a curable composition.

### (Examples 12 to 20 and Comparative Examples 2 to 4)

Curable compositions were obtained in the same manner as the curable composition of Example 1, except that the amounts of the components were changed as shown in Table 2. Neostann U-100 listed as the curing catalyst (C) is dibutyltin dilaurate (manufactured by Nitto Kasei Co., Ltd.). DBU is 1,8-diazabicyclo[5.4.0]undec-7-ene.

### (Curability)

Each curable composition was spread by means of a spatula, and this moment was defined as a start time. The surface of the composition was touched with the spatula, and the time (skinning time) taken for the composition to become non-sticky to the spatula was measured. The results are shown in Table 2.

### (Tensile Properties)

Each curable composition was formed into a sheet-shaped specimen with a thickness of 3 mm. The specimen was placed at 23°C and 50% RH for 3 days and then in a dryer set to 50°C for 4 days, and thus the specimen was completely cured. The cured specimen was punched into a No. 3 dumbbell-shaped piece, whose tensile strength at break (shown as "TB") was measured by a tensile test performed at a tensile speed of 200 mm/min using Autograph manufactured by Shimadzu Corporation. The results are shown in Table 2.

**[Table 2]**

| | | Ex. 11 | Ex. 12 | Ex. 13 | Ex. 14 | Ex. 15 | Ex. 16 | Ex. 17 | Ex. 18 | Ex. 19 | Ex. 20 | Comp. 2 | Comp. 3 | Comp. 4 |
|---|---|---|---|---|---|---|---|---|---|---|---|---|---|---|
| Component (A) | A-3 | | | 30 | | | | | | | | | | |
| | A-6 | | | | 30 | | | | | | | | | |
| | A-7 | | | | | 30 | | | | | | | | |
| | A-8 | 30 | 30 | | | | 30 | | | 30 | 30 | | | |
| | A-9 | | | | | | | 30 | | | | | | |
| | A-10 | | | | | | | | 30 | | | | | |
| Component (B1) | B1-1 | 70 | 70 | | | | | | | | | 100 | 100 | |
| Component (B2) | B2-1 | | | 70 | 70 | 70 | 70 | 70 | 70 | 70 | 70 | | | 100 |
| Colloidal calcium carbonate | Hakuenka CCR | 50 | 50 | 50 | 50 | 50 | 50 | 50 | 50 | 50 | 50 | 50 | 50 | 50 |
| Adhesion promoter | Silquest A-1120 | 2 | 2 | 2 | 2 | 2 | 2 | 2 | 2 | 2 | 2 | 2 | 2 | 2 |
| Dehydrating agent | Silquest A-171 | 3 | 3 | 3 | 3 | 3 | 3 | 3 | 3 | 3 | 3 | 3 | 3 | 3 |
| Component (C) | Neostann U-28 | 1.5 | | 1.5 | 1.5 | 1.5 | 1.5 | 1.5 | 1.5 | | | 1.5 | | 1.5 |
| | Neostann U-100 | | 1 | | | | | | | 1 | | | 1 | |
| | DBU | | | | | | | | | | 1 | | | |
| | Laurylamine | 0.25 | | 0.25 | 0.25 | 0.25 | 0.25 | 0.25 | 0.25 | | | 0.25 | | 0.25 |
| Tensile properties of dumbbell specimen | TB (MPa) | 3.99 | 2.30 | 2.39 | 2.76 | 2.79 | 3.65 | 3.00 | 3.04 | 2.14 | 2.42 | 2.00 | 1.90 | 1.72 |
| Curability | Skinning time (min) | 127 | 40 | 126 | 161 | 148 | 92 | 123 | 142 | 26 | 7 | 280 | 370 | 161 |

Table 2 shows that in Example 11, where the component (B1) was blended with the component (A), the tensile strength at break was much higher than in Comparative Example 2 where the component (B1) was used alone. Additionally, in Example 11, the curability was satisfactory as demonstrated by the skinning time which was shorter than that in Comparative Example 2. The same can be said of a comparison of Example 12 and Comparative Example 3.

It is also seen that in Examples 13 to 20, where the component (B2) was blended with the component (A), the tensile strength at break was much higher than in Comparative Example 4 where the component (B1) was used alone. Additionally, in Examples 13 to 20, the curability was satisfactory as demonstrated by the skinning time which was equal to or shorter than that in Comparative Example 4.

Furthermore, a comparison of Examples 11 and 12 and a comparison of Example 16 and Example 19 or 20 reveal that in Examples 12, 19, and 20, where dibutyltin dilaurate which is a tetravalent tin compound, or DBU which is an amine compound having an amidine skeleton, was used as the curing catalyst (C), the skinning time was shorter and the curing speed was higher than in Examples 11 and 16.

## Claims

1. A polysilsesquioxane polymer (A) comprising:
a polysilsesquioxane backbone;
an alkoxysilyl group (a1) bonded to the polysilsesquioxane backbone and/or a silanol group (a2) bonded to the polysilsesquioxane backbone;
an alkyl group (b1) having 1 to 10 carbon atoms and bonded directly to a silicon atom of the polysilsesquioxane backbone and/or an aryl group (b2) having 6 to 10 carbon atoms and bonded directly to a silicon atom of the polysilsesquioxane backbone; and
a polyalkylene oxide polymer chain (c1) and/or a linear poly(meth)acrylic polymer chain (c2), wherein
one end of the polyalkylene oxide polymer chain (c1) and/or one end of the linear poly(meth)acrylic polymer chain (c2) is bonded to the polysilsesquioxane backbone.

2. The polysilsesquioxane polymer (A) according to claim 1, comprising the polyalkylene oxide polymer chain (c1).

3. The polysilsesquioxane polymer (A) according to claim 1, comprising the linear poly(meth)acrylic polymer chain (c2).

4. The polysilsesquioxane polymer (A) according to any one of claims 1 to 3, wherein a weight ratio of a total amount of the alkyl group (b1) having 1 to 10 carbon atoms and the aryl group (b2) having 6 to 10 carbon atoms to a total amount of the polyalkylene oxide polymer chain (c1) and the linear poly(meth)acrylic polymer chain (c2) is from 10:90 to 90:10.

5. A method for producing the polysilsesquioxane polymer (A) according to any one of claims 1 to 4, the method comprising subjecting the following components to a hydrolysis and dehydration condensation reaction in the presence of water:
an alkoxysilane component containing a trialkoxysilane having a silicon atom bearing an alkyl group having 1 to 10 carbon atoms and/or an aryl group having 6 to 10 carbon atoms; and
a polyalkylene oxide polymer terminated at one end by a reactive silyl group and/or a linear poly(meth)acrylic polymer terminated at one end by a reactive silyl group.

6. A curable composition comprising:
the polysilsesquioxane polymer (A) according to any one of claims 1 to 4;
a polyalkylene oxide polymer (B1) having a reactive silyl group and/or a poly(meth)acrylic polymer (B2) having a reactive silyl group; and
a curing catalyst (C).

7. The curable composition according to claim 6, wherein a proportion of the polysilsesquioxane polymer (A) in a total amount of the polysilsesquioxane polymer (A) and the polyalkylene oxide polymer (B1) having a reactive silyl group and/or the poly(meth)acrylic polymer (B2) having a reactive silyl group is from 1 to 90 wt%.

8. A sealing material comprising the curable composition according to claim 6 or 7.

9. An adhesive comprising the curable composition according to claim 6 or 7.

10. A cured product produced by curing the curable composition according to claim 6 or 7.
